# EUROPEAN PATENT APPLICATION

(11) **EP 0 968 638 A1**
(43) Date of publication of application: **05.01.2000**
(21) Application number: 99303298.6
(22) Date of filing: 28.04.1999
(51) Int. Cl.: A01B 3/42

(54) **Combined depth and transport wheel for reversible plough**

(30) Priority: 30.06.1998 GB 9813964
(71) Applicant: KVERNELAND KLEPP AS, N-4344 Kvernaland (NO)
(72) Inventor: Salte, Torstein, 4060 Kleppe (NO)
(74) Representative: Orr, William McLean

(57) **Abstract**

A wheel-mounting assembly for supporting the frame of a reversible plough, and which is convertible between operation in a depth control mode and in a transport mode, in which the assembly comprises; a wheel 1; a wheel arm 2; a holder 3a in which the wheel arm is mounted; an axle assembly 3 rigidly connected to the holder 3a; and a mounting arrangement 6 adapted to mount the axle assembly 3 at a fixed mounting location on the frame of the reversible plough; in which the axle assembly 3 is pivotally mounted in the mounting arrangement 6 so as to be capable of limited pivoting movement about its axis 30 during plough body reversal; and the wheel arm 2 and the holder 3a are mounted on the axle assembly 3 in such a way that, as seen in plan, the general axis of the wheel arm extends obliquely outwardly of the axis 30 of the axle assembly 3.

## Description

This invention relates to a combined depth and transport wheel for a reversible plough.

As is well known, a semi-mounted reversible plough is coupled at a forward end of the plough frame to a usual lifting linkage at the rear of a tractor, and is maintained at a required height above the ground which is being ploughed by a depth control wheel which supports the plough frame at the rear end thereof, or at an intermediate part of the frame between the forward and rear ends of the plough frame.

It is also known to provide a transport wheel which is mounted on the plough frame, at or near the rear end thereof, and which is capable of supporting the plough frame, for transport along the public highway, after the plough frame has been rotated to a mid-position (transport position) between left side ploughing and right side ploughing positions.

In the past, it was usual to provide two separate wheels for supporting a semi-mounted reversible plough, namely a depth control wheel, and a transport wheel. However, with a view to reducing the number of components, it has been proposed to provide a combined depth and transport wheel, and which is convertible between a depth control mode and a transport mode. Bearing in mind that separate depth and transport wheels are each mounted on a rotatable plough beam, each will normally be in contact with the ground in its operating mode, and will be out of contact with the ground in the inoperative mode.

However, the operating position of the depth wheel will be obtained when the plough beam is in the ploughing position, and will be in its inoperative position when the plough beam has been rotated to the transport position. Conversely, the transport wheel will be in its operating position when the plough beam is in the transport position, and will be in its inoperative position when the plough beam is in either of the two ploughing positions.

Therefore, to provide a single wheel which can function as a depth wheel or a transport wheel when required, necessarily requires a somewhat complicated construction. Thus, the construction must allow the wheel to be in contact with the ground when it functions as a depth wheel (with the plough beam in either the left side or the right side ploughing position), and to remain in contact with the ground when it functions as a transport wheel (despite the fact that the plough beam will have been rotated through approximately 90° from either left side ploughing or right side ploughing in order to take up the transport position).

A further factor to bear in mind (in designing a single wheel which is readily convertible between functioning in two separate modes of operation, namely as a depth control wheel or as a transport wheel), is that the wheel must be able to move with the plough beam during the rotation of the plough beam through approximately 180° between left side and right side ploughing, and it must start and finish this movement by being in contact with the ground.

All of these factors contribute to make the design of mounting of a combined depth/transport wheel to be somewhat complicated in construction, and/or requiring time consuming manual manipulation of the mounting assembly to convert the wheel between its two modes of operation.

The present invention therefore seeks, in one aspect, to provide an improved design of wheel mounting assembly, enabling a single wheel to be easily converted between a depth control mode and a transport mode.

According to one aspect the invention provides a wheel mounting assembly as defined in claim 1.

According to a further aspect, the invention provides a wheel assembly as defined in claim 2.

Preferred embodiments of combined depth and transport wheel for a reversible plough, and according to the invention, will now be described in detail, by way of example only, with reference to the accompanying drawings, in which:
Figure 1 is a detailed view, in side view, of part of a mounting arrangement for mounting a wheel according to the invention on a rotatable plough beam of a reversible plough (not shown);
Figure 2 is a view, corresponding to Figure 1, but in plan view;
Figure 3 is a plan view, similar to Figure 2, showing a modification to the mounting arrangement of Figures 1 and 2;
Figure 4 is a plan view of a rotatable plough beam of a reversible plough, and showing two possible mounting positions of a wheel according to the invention;
Figure 4a is a detail view, corresponding to Figure 4, and showing the wheel when converted to the depth control mode;
Figure 5 is a detailed plan view of part of a reversible plough having an automatically adjustable mechanism for varying plough furrow widths formed by the plough shares of the reversible plough, and on which can be mounted an embodiment of wheel assembly according to the invention;
Figure 6 is a side view of a known arrangement of reversible plough, and to illustrate a component thereof which may be incorporated in a further embodiment of wheel according to the invention; and
Figure 7 is a detailed side view corresponding to part of Figure 6.

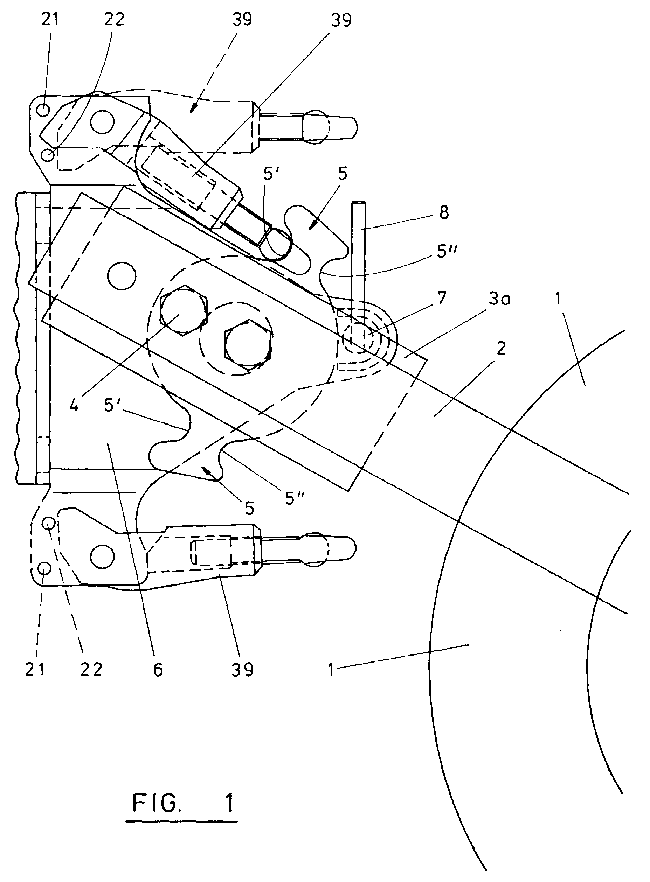

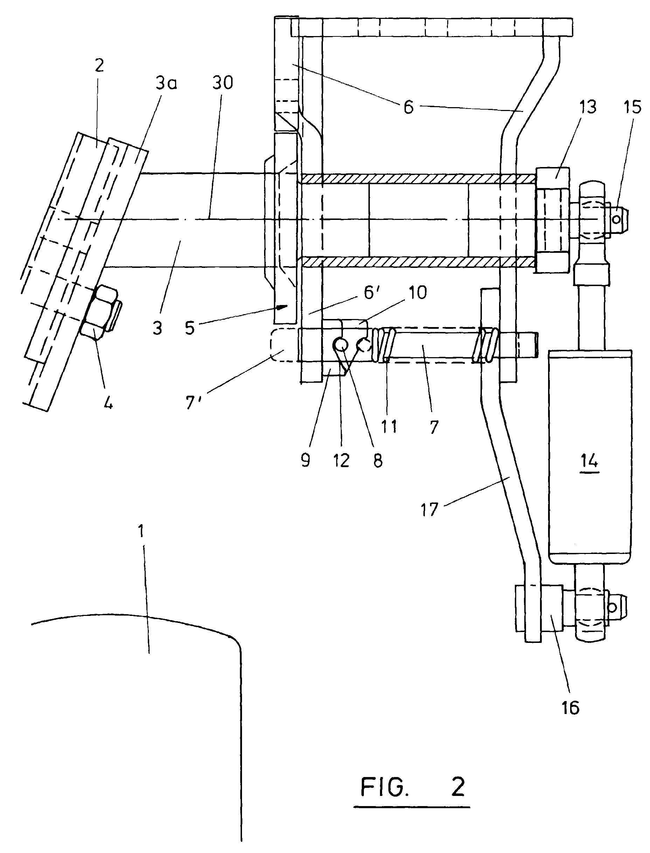

Referring first to Figures 1 and 2 of the drawings, a first embodiment of wheel mounting assembly according to the invention will now be described in detail. A wheel 1 is mounted on a free end of a wheel arm 2, and is shown in Figures 1 and 2 in a first operating mode, whereby it can function as a depth control wheel, to control the ploughing depth of the plough bodies of a semi-mounted reversible plough. The wheel arm 2 is adjustably mounted in a holder 3a, and can be adjusted between a number of different depth positions e.g. three different positions in the illustrated embodiment, by use of one or more mounting fasteners 4 taken through appropriate mounting holes. This means that a single design of wheel arm 2 can have three different effective lengths, all being obtained with the same design of arm. Therefore one design of arm can be manufactured, and which can be adjusted with regard to its depth setting for ploughs with different plough beam heights.

The holder 3a is secured to one end of a rotatable axle assembly 3, and as can be seen from Figure 1, holder 3a extends downwardly at an angle to the vertical, and therefore so also does the wheel arm 2. The angle of inclination to the vertical, set by the holder 3a, will be determined by the adjustable rotation of the axle assembly 3 about its axis, by an adjustment mechanism which will be described below.

Also, as can be seen from Figure 2, the holder 3a extends obliquely outwardly with respect to the axis 30 of the axle assembly 3 (in addition to the downward inclination as shown in Figure 1). The angles of inclination are carefully selected, in relation to any particular design of reversible plough to which the wheel is to be attached, and bearing in mind that the wheel mounting assembly will be mounted at any suitable supporting position along the length of a rotatable plough beam of the reversible plough. It will be important that the wheel 1, when functioning in its depth control mode, will be in contact with the ground, when the plough beam has been adjusted to left side ploughing or right side ploughing (involving a rotation of approximately 180° of the plough beam between each ploughing setting).

As mentioned above, the axle assembly 3 is capable of being rotatably adjusted about its axis, and to this end it is provided with an integrally attached mounting plate designated generally by reference 5, and which is provided with a pair of substantially diametrically opposed abutment shoulders, in which each shoulder has a pair of opposed abutment surfaces 5' and 5''. The axle assembly 3 is taken through a main mounting bracket 6, and within which it is pivotably mounted. However, upon adjustment to any particular angular setting, the axle assembly is held in this adjusted position by the mounting plate 5 and a ring 13 fastened to the end of axle assembly 3, as shown in Figure 2.

The wheel 1, when operating in a depth control mode as shown in Figures 1 and 2, will determine the ploughing depth of the plough shares, but the actual depth setting determined by the wheel 1 will be controlled by so-called Y-screws 39 which are mounted on the main bracket 6 as shown in Figure 1. The adjustment of the wheel 1 is achieved by varying the angular adjustment of the axle assembly 3, by operation of the adjusting screws 39, as will be described in more detail below. For clarity, the adjusting screws 39 are not shown in Figure 2, but are in fact mounted on the main bracket 6, as referred to above, and as shown in Figure 1.

A control pin 7 is taken through the main bracket 6, and is provided with an operating handle 8. The pin 7 is also taken through a sleeve 9 which is fastened to the main bracket 6, and a complementary sleeve 10 is mounted on the pin 7. The sleeves 9 and 10 have inclined mating faces, as shown in Figure 2, and these mating faces are normally pressed into contact with each other by means of a compression spring 11, wound around the pin 7. A free end 7' of the pin 7 projects from a mounting flange 6' of the main bracket 6.

The inclined mating faces of the sleeves 9 and 10 are capable of providing a camming action upon rotation of the pin 7 about its axis by operation of handle 8. Thus, upon rotation of pin 7 through approximately 90°, this causes the projecting end 7' to be withdrawn from its projecting position and into the mounting flange 6'. However, when the end 7' is in its projecting position, as shown in dashed outline in Figure 2, it is capable of preventing the axle assembly 3 from rotating about its axis. Further, upon plough body reversal, the axle assembly 3 is capable of pivoting through a limited angle, determined by engagement of one or the other of the abutment faces 5'' with the projecting end 7' of pin 7. Thus, when the plough bodies are reversed i.e. upon rotation of the plough beam through approximately 180° between left side ploughing and right side ploughing, the wheel 1 hangs down under gravity, and the uppermost one of the abutment faces 5' (see Figure 1) moves into engagement with the pin 7. However, upon lowering of the plough, the wheel 1 moves into contact with the ground, and continues to be pressed upwardly until the plough bodies also engage the ground. The plough bodies protrude down into the soil until the uppermost abutment face 5' is moved into engagement with the upper one of the two adjusting screws 39. The plough bodies are then unable to penetrate deeper into the soil, because this will be resisted now by the firm contact with the ground of the wheel 1, which functions as a depth control wheel. This is the position of the wheel and adjustment assembly as shown in Figure 1.

When the plough bodies are being reversed between left side ploughing and right side plough, or vice versa, it is the action of gravity which brings the wheel 1 from one side to the other i.e. it falls from one side to the other. It is therefore desirable to have some form of damping, and which is achieved in the illustrated embodiment by provision of a damping cylinder 14 connected via a crank arm 15 to ring 13 mounted on a free end of the axle assembly 3, as shown in Figure 2. The damping cylinder 14 is also mounted on the main bracket 6 via pin 16 and arm 17.

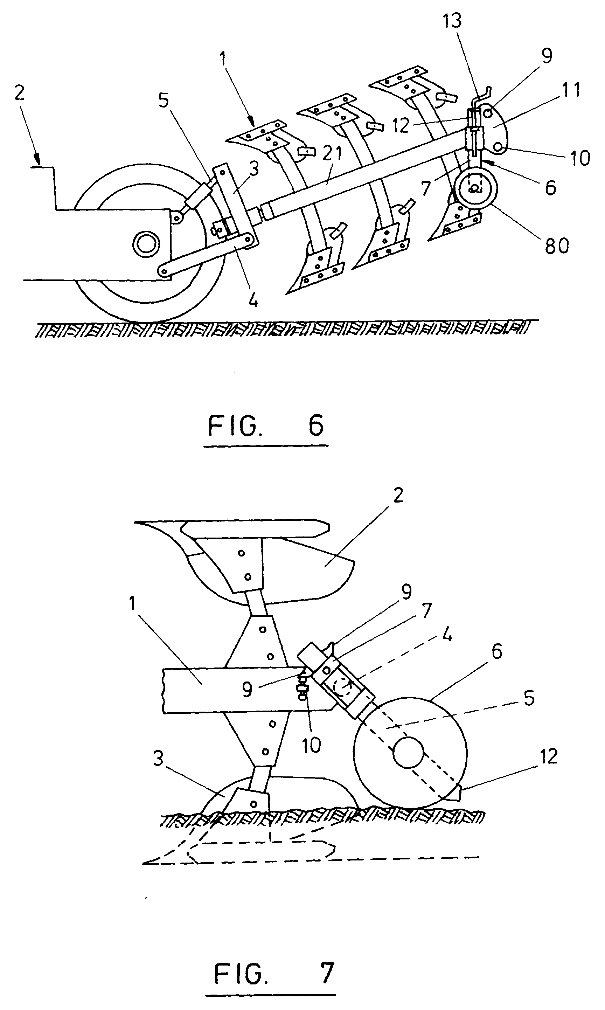

As can be seen clearly from Figures 1 and 2, the wheel 1 takes up a trailing position with respect to its mounting assembly i.e. it is always extending rearwardly of its mounting, both in left side ploughing position and also in right side ploughing position. This is necessary in many designs of reversible ploughs, so as to make sure that the wheel does not bump into parts of the plough during plough body reversal. However, on other designs of reversible ploughs, the arrangement of the various components of the plough may be such as to permit the wheel arm 2 and wheel 1 to rotate freely (about a generally upright axis), and therefore with such design, it may be possible to arrange for the wheel arm 2 to extend forwardly of its mounting i.e. for the wheel 1 to be located forwardly of its mounting. This can be achieved if the projecting pin end 7' is withdrawn, as described above. Then, when the plough beam is rotated in order to lift one set of plough bodies out of the ground, the wheel 1 can hang downwardly, as will become more apparent from the following brief description with reference to Figure 6 of the drawings.

In Figure 6, a known arrangement of depth control wheel 80 is shown, projecting downwardly and forwardly of its mounting, and such mounting being provided at the rear end of a rotatable plough beam 21, carrying pairs of reversible plough bodies 1. When the plough is lifted, as shown in Figure 6, and during reversal of the plough bodies, the wheel 80 will swing over to another position, while still projecting downwardly and forwardly. It is therefore not necessary to provide a damping cylinder to control such movement, because the movement is not stopped by a pin, and the pin arrangement also therefore can be omitted. It may however be necessary to make use of a peg 12 on the end of the wheel arm, as shown in Figure 7, to get the wheel back to the rearwardly extending position again (if required) after reversal.

Figures 6 and 7 therefore show that the embodiment of wheel assembly of the invention (shown in Figures 1 to 5)may be modified so as to provide a forwardly projecting wheel assembly.

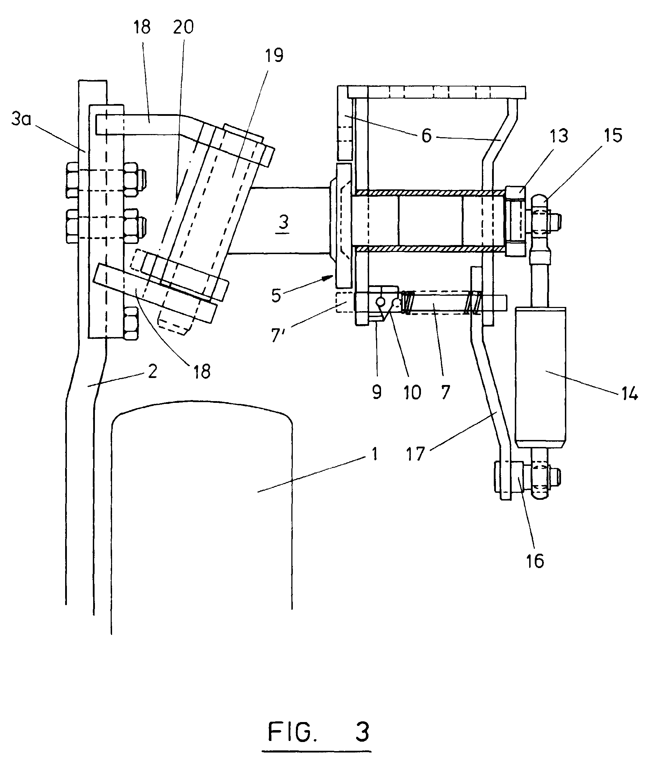

The wheel 1 has been described above with reference to Figures 1 and 2, when converted to operate in a depth control mode. There will now be described the minor technical changes required in order to alter the operation of the wheel 1, in order to function as a transport wheel. Reference will now be made to Figure 3 of the drawings, and parts corresponding with those already described and illustrated will be given the same reference numerals, and therefore do not need to be described in detail again.

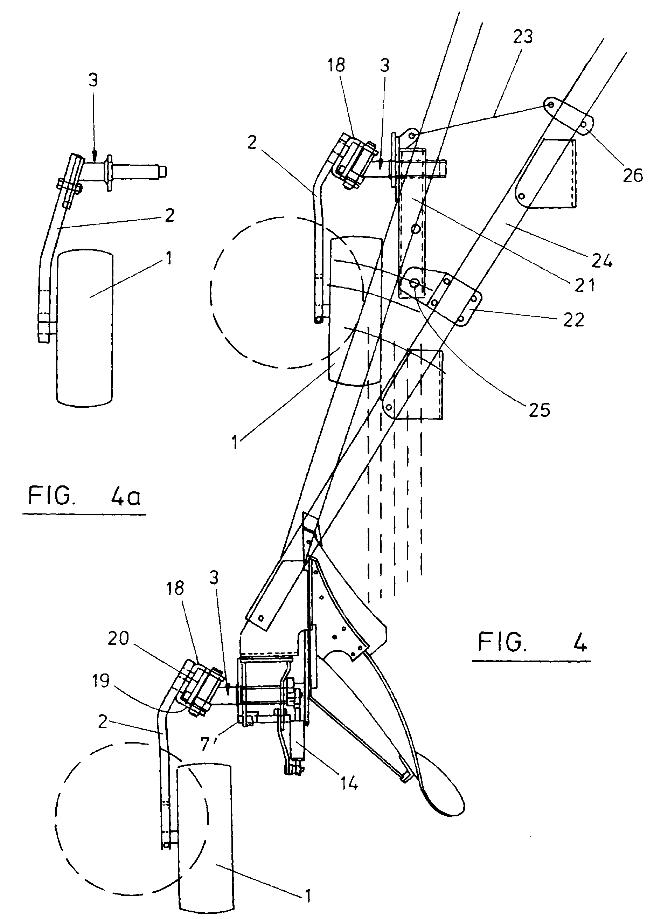

In Figure 3, the mounting of the axle assembly on the mounting bracket (6), and the means of adjustment, are generally similar no that described and shown in Figures 1 and 2, but the manner by which the wheel arm 2 is mounted on the axle assembly is modified. Thus, a mounting bracket 18 is provided, which mounts an upper end of wheel arm 2 on axle assembly 3. A pivot shaft 19 is mounted within the bracket 18, and a pin 20 is taken through mounting holes in the bracket 18 and the axle assembly 3, to hold the parts together in the required position. The component parts are shown in Figure 3 for the ploughing position. However, in order to adjust the wheel 1 so that it can be used in transport mode, it is necessary to pivot the bracket 18 about the pivot 19 until the wheel takes up the position shown in dashed outline in Figure 4. Figure 4 shows two alternative mounting positions of the wheel assembly, one being at a rear end of a plough beam 24, and the other being an intermediate position. It is also necessary to withdraw the pin end 7' so that the axle assembly 3 can pivot freely. Further, it is necessary to lock both the adjustment screws 39 in the position shown by dashed lines for the upper adjustment screw in Figure 1. This can be achieved by placing a pin into one of the holes 22, as shown. When the pin is not in use, it can be stored in one of the holes 21.

As shown in Figure 4, the wheel assembly can be mounted on the rear of the main frame of the reversible plough, or in a more forward position. In the solid line illustration of the wheel 1, in either of its mounting locations, it is shown in the ploughing position, and in which it can operate as a depth control wheel. Following adjustment to the transport position shown in dashed outline, it will be apparent that upon rotation of the plough beam 24 through approximately 90° from the ploughing position to the transport position, the wheel 1 will then move to a position in which it extends in a vertical plane so that it can then function as a transport wheel to support the plough frame so that it can then be towed along a public highway.

The convertible wheel mounting assembly of the invention may be mounted on the frame of a plough having fixed ploughing width, or on a plough having stepwise adjustable plough width. To mount the wheel assembly on the plough frame 24, a mounting arm 21 and a mounting bracket 22 are provided, with the axle assembly being mounted on arm 21, and arm 21 being connected to main frame 24 via bracket 22. The mounting arm 21 is able to pivot about a vertical pivot 25, and is held in any required position of adjustment about pivot 25 by a length adjustable strut 23. As shown schematically, adjustable strut 23 extends between forward end of mounting arm 21 and a fixed mounting bracket 26 on the main frame 24. The same design of axle assembly 3 can fit into main bracket 6 (as described above) with reference to Figures 1 and 2, as it fits into mounting arm 21.

In the detail illustration Figure 4a, there is shown a rear view of the wheel 1 when converted to operate as a depth control wheel. Figure 4a also shows the unmodified arrangement of the axle assembly 3.

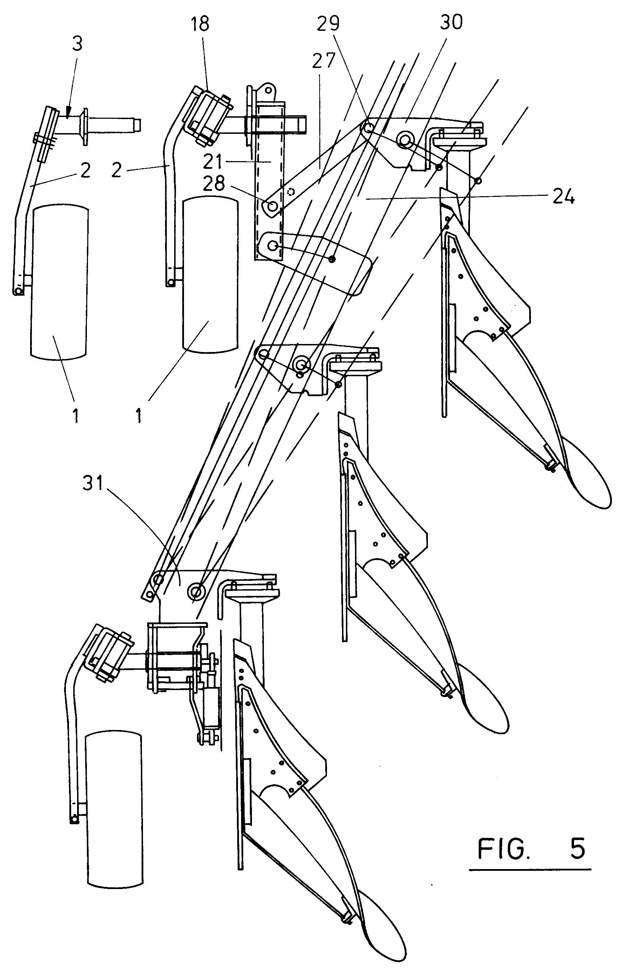

Referring to Figure 5, this shows how an embodiment of wheel assembly of the invention can be mounted on a stepless adjustable plough, and also shows the components necessary to convert the axle assembly mounting from function as a depth control wheel (see top left hand detail illustration of Figure 5) with unmodified axle assembly 3, to function as a transport wheel with modified assembly of wheel arm 2 to axle assembly 3. In the mounting of the wheel assembly on a stepwise adjustable plough, it is necessary to provide a set of mounting beams 27 (one upper and one lower), and which extend between a pivot mounting 28 on mounting arm 21 and a pivot 29 on a mounting bracket 30 mounted on plough beam 24. When the ploughing width is adjusted, the angle between beam bracket 30 and main plough beam 24 is changed, and the inclination of mounting beam 21 is automatically adjusted. The geometry of the mechanism is set up so that the position of the wheel 1 is always parallel to the plough bodies and to the ploughing direction. When the wheel assembly is mounted at the rear end of plough beam 24, the main bracket of the assembly is mounted on a rearmost beam bracket 31, and the adjustment of the wheel 1 then also follows automatically.

The embodiments of convertible wheel assembly according to the invention (which can operate as a depth control wheel, or be easily converted to operate as a transport wheel) therefore have the following technical advantages:
1. The wheel can be used as a conventional depth control wheel.
2. The wheel can be used as a combined depth and transport wheel, by simple replacement of a few parts. To adapt the wheel mounting assembly from the simple arrangement as a depth wheel, to operate as a combined wheel, it is only necessary to provide the additional component parts 18, 19 and 20.
3. When the plough is reversed, it is possible to arrange for the wheel to follow the reversing movement of the plough bodies, and to extend forwardly or rearwardly of its mounting, as may be required by the design of the plough on which it is mounted. If it is required that the wheel shall extend rearwardly of its mounting, the damping cylinder is necessary, whereas on designs of plough where forward extension of the wheel relative to its mounting is permitted, the damping cylinder arrangement can be omitted.
4. When the wheel assembly is mounted on the frame of an automatically adjustable ploughing width type plough, the attitude taken up by the wheel is automatically adjusted when the ploughing width is adjusted.
5. It is simple to switch the wheel assembly from ploughing position to transport position, and this can be done without special tools.

## Claims

1. A wheel-mounting assembly for supporting the frame of a reversible plough which comprises a plough beam, pairs of reversible plough bodies mounted along the length of the plough beam, support means at the forward end of the plough frame to support the plough at the rear end of a propelling vehicle, means for rotating the plough beam in order to reverse the plough bodies between left side ploughing and right side ploughing, and means for converting the assembly between operation in a depth control mode and in a transport mode, in which the wheel mounting assembly comprises:
a wheel (1);
a wheel arm (2);
a holder (3a) in which said wheel arm is mounted;
an axle assembly (3) rigidly connected to said holder (3a); and,
a mounting arrangement (6) adapted to mount the axle assembly (3) at a fixed mounting location on the frame of the reversible plough;
in which:
the axle assembly (3) is pivotally mounted in said mounting arrangement (6) so as to be capable of limited pivoting movement about its axis (30) during plough body reversal; and,
the wheel arm (2) and the holder (3a) are mounted on the axle assembly (3) in such a way that, as seen in plan, the general axis of the wheel arm extends obliquely outwardly of the axis (30) of the axle assembly (3).

2. A wheel-mounting assembly for supporting the frame of a reversible plough which comprises a plough beam, pairs of reversible plough bodies mounted along the length of the plough beam, support means at the forward end of the plough frame to support the plough at the rear end of a propelling vehicle, and means for rotating the plough beam in order to reverse the plough bodies between left side ploughing and right side ploughing, in which the wheel mounting assembly comprises:
a wheel (1);
a wheel arm (2);
a holder (3a) in which said wheel arm is mounted;
an axle assembly (3) rigidly connected to said holder (3a); and,
a mounting arrangement (6) adapted to mount the axle assembly (3) at a fixed mounting location on the frame of the reversible plough;
in which:
the axle assembly (3) is pivotally mounted in said mounting arrangement (6) so as to be capable of limited pivoting movement about its axis (30) during plough body reversal; and,
the wheel arm (2) and the holder (3a) are mounted on the axle assembly (3) in such a way that, as seen in plan, the general axis of the wheel arm extends obliquely outwardly of the axis (30) of the axle assembly (3).

3. A wheel assembly according to claim 1 or claim 2, in which the wheel arm (2) is adjustable lengthwise relative to its mounting in the holder (3a), to allow the wheel to be adjusted to suit different designs of plough.

4. A wheel assembly according to any one of claims 1 to 3, in which the axle assembly (3) is pivotally adjustable between limits determined by interengagement between a pair of circumferentially spaced abutment faces (5'') on a mounting plate (5) secured to the axle assembly (3), and a control pin (7).

5. A wheel assembly according to claim 4, in which the mounting plate (5) has a further pair of circumferentially spaced abutment faces (5') each engageable with a respective depth setting adjustment (39).

6. A wheel assembly according to claim 4 or 5, in which the control pin is manually adjustable to move its projecting end (7') out of the path of movement of the abutment faces (5'').

7. A wheel assembly according to claim 6, in which a handle (8) is mounted on the control pin (7).

8. A wheel assembly according to any one of the preceding claims, including a mounting bracket (18) which is detachably connected to the holder (3a) in order to adapt the wheel assembly to function as a transport wheel, said bracket (18) being pivotally connected to the axle assembly (3) to pivot about an obliquely extending pivot pin (19).

9. A wheel assembly according to any one of the preceding claims and mounted on a plough beam of a reversible plough.

10. A wheel assembly according to claim 9, in which the wheel arm (2) extends rearwardly of the axle assembly (3).

11. A wheel assembly according to claim 9, in which the wheel arm (2) extends forwardly of the axle assembly (3).

12. A wheel assembly according to any one of claims 9 to 11, in which the plough is a stepless adjustable width plough.
